# EUROPEAN PATENT SPECIFICATION

(11) **EP 4 272 719 B1**
(45) Date of publication and mention of the grant of the patent: **11.11.2026**
(21) Application number: 21915713.8
(22) Date of filing: 27.12.2021
(51) Int. Cl.: A61H 1/02, B25J 9/00, B25J 9/10, B25J 9/16

(54) **EXOSKELETON-TYPE REHABILITATION ROBOT SYSTEM**
REHABILITATIONSROBOTERSYSTEM VOM EXOSKELETTTYP
SYSTÈME DE ROBOT DE RÉÉDUCATION DE TYPE EXOSQUELETTE

(30) Priority: 30.12.2020 KR 20200187511; 01.10.2021 KR 20210130617
(43) Date of publication of application: 08.11.2023
(73) Proprietor: Hexarhumancare Co., Ltd, Ansan-si, Gyeonggi-do 15588 (KR)
(72) Inventor: HAN, Chang Soo, Seoul 06764 (KR); KIM, Ho Jun, Seoul 07508 (KR); PARK, Su Hyun, Hwaseong-si Gyeonggi-do 18265 (KR); JI, Young Hoon, Ansan-si Gyeonggi-do 15539 (KR); CHO, Jeong Ho, Hanam-si Gyeonggi-do 12911 (KR); RYU, Byung Gab, Ansan-si Gyeonggi-do 15596 (KR); PARK, Jeong Gyu, Gimpo-si Gyeonggi-do 10087 (KR); CHOI, Dong Eun, Ansan-si Gyeonggi-do 15586 (KR)
(74) Representative: V.O.
(86) International application number: PCT/KR2021/019919
(87) International publication number: WO 2022/145915

(56) References cited:
- CN-A- 111 135 013
- KR-A- 20150 048 432
- KR-A- 20150 048 432
- KR-A- 20150 082 711
- KR-A- 20180 034 036
- KR-B1- 101 248 766
- KR-Y1- 200 459 496
- US-B2- 8 177 732

## Description

### [Cross-Reference to Related Applications]

This application is a National Stage Entry of PCT International Application No. PCT/KR2021/019919, which was filed on December 27, 2021, and which claims priority to Korean Patent Application No. 10-2020-0187511, filed on December 30, 2020, and Korean Patent Application No. 10-2021-0130617, filed on October 01, in the Korean Intellectual Property Office.

### [Technical Field]

The present invention relates to an exoskeleton-type rehabilitation robot system, and more particularly to an exoskeleton-type rehabilitation robot system provided integrally with a chair on which a user sits to increase space utilization efficiency and capable of converting left and right driving of a robot arm to reduce a training preparation time.

### [Background Art]

Existing exoskeleton-type upper extremity rehabilitation robots have a problem in that a system and a chair are separated for left and right conversion, and the position of the entire system must be adjusted according to the training direction of a patient. In addition, even when the existing exoskeleton-type upper limb rehabilitation robot is provided as a system-chair integrated type, a guide for left and right direction conversion is designed to protrude long to both sides, so a setting process for preparation for training is relatively complicated and takes a long time, and it is necessary to secure a relatively large amount of space such as a hospital.

Accordingly, research on an exoskeleton-type rehabilitation robot system that can increase system space utilization efficiency and reduce training preparation time has been continuously required in recent years.

Document KR 2015 004 8432 discloses a joint exercising apparatus, which has a body part exercised by corresponding joint hung, connects a hanging body member vertically rotated with an operating body member, connects the operating body member with a movable body member to be horizontally rotated, linearly moves the movable body member in the opposite direction to the rotatory direction of the operating body member with a moving device to be vertically and horizontally rotated.

### [Technical Problem]

Therefore, the present invention has been made in view of the above problems, and it is one object of the present invention to provide an exoskeleton-type rehabilitation robot system capable of increasing space utilization efficiency, reducing training preparation time, and converting left and right driving of a robot arm.

### SUMMARY OF THE INVENTION

The present invention is directed to an exoskeleton-type rehabilitation robot system according to claim 1.

Additional features and embodiments of the invention are defined in the dependent claims.

### SUMMARY OF THE DISCLOSURE

In accordance with an aspect of the present invention, the above and other objects can be accomplished by the provision of an exoskeleton-type rehabilitation robot system according to the independent claim, and in detail by an exoskeleton-type rehabilitation robot system, including:
a body part provided on a chair in which a user sits and provided with a robot arm capable of moving left or right based on the user seated on the chair; a conversion part configured to convert a position of the robot arm with respect to the body part; a driving part configured to articulate the robot arm with respect to the body part; and a controller configured to detect a change in a position of the robot arm and control a left or right driving mode of the driving part according to the position of the robot arm.

In addition, the body part includes: a robot body integrally provided to support the chair; a connection link formed to protrude vertically upward from and connected to the robot body; and the robot arm rotatably connected to the connection link and provided with a plurality of driving links capable of performing joint motion.

In addition, the position of the robot arm may be adjusted in up and down, forward and backward, and left and right directions based on the chair in response to a body shape of the user.

In addition, the conversion part includes: a connection member provided between the connection link and the robot arm to be movable integrally with the robot arm; at least one tightening lever configured to protrude toward the connection link with respect to the connection member and provided to be integrally rotatable with the robot arm; first and second lever grooves provided on the connection link such that the tightening lever is inserted thereinto, at least one of the first and second lever grooves being respectively provided on left and right sides to face each other with a rotation center of the connection link interposed therebetween; and a positioning pin provided to protrude from the connection link so as to be guided along a guide rail provided on the connection member and configured to determine a rotational position of the robot arm by limiting a rotation range of the robot arm having the connection member, wherein a left and right driving mode of the robot arm is automatically converted in conjunction with the tightening lever inserted into one of the first and second lever grooves and tightened and fixed.

In addition, the connection member may be rotatably connected to an end of the connection link by a bearing, and the bearing may include a cross roller bearing.

In addition, the robot arm may include: a first driving link whose one end is rotatably connected to the connection link; a second driving link whose one end is rotatably connected to another end of the first driving link; a third driving link whose one end is rotatably connected to another end of the second driving link; and a fourth driving link whose one end is rotatably connected to another end of the third driving link, wherein the fourth driving link is rotatably connected to a cradle on which user's arm is placed.

In addition, the driving part may include: a first driving member provided between the first driving link and a connection link of the second driving link to provide rotatory power thereto; a second driving member provided between the second and third driving links o provide rotatory power thereto; a third driving member provided between the third and fourth driving links to provide rotatory power thereto; and a fourth driving member provided between the fourth driving link and the cradle to provide rotatory power thereto.

In addition, the first to fourth driving links may have a bar shape extending in a longitudinal direction or a bent shape.

In addition, the controller includes: a sensing part configured to detect that the tightening lever is inserted into one of the first and second lever grooves; and a signal input part configured to provide a driving signal to the driving part with information sensed from the sensing part.

In addition, the sensing part may include: a first sensor prepared to correspond to a left direction position of the robot arm; a second sensor prepared to correspond to a right direction position of the robot arm; and a sensing member configured to detect a left or right direction driving posture of the robot arm by interfering with one of the first and second sensors.

In addition, the sensing member may include a trigger provided to interlock with the connection member and movable between the first and second sensors.

In addition, the first and second sensors may detect the sensing member by physical contact or by a proximity sensing method, an optical sensing method or a magnetic sensing method, and the sensing member may be provided by coloring a partial area of the robot arm or provided to protrude or be recessed from the robot arm.

In addition, when a left or right position of the robot arm is detected, the controller may rotationally drive the fourth driving member, and then rotationally drives the first and second driving members, and, when the driving of the first and second driving members is completed, the controller may rotate each of the second and third driving members while continuously driving the first driving member, and then drives the third driving member to set a driving posture.

In addition, the chair may be provided with a belt adjustable in a longitudinal direction to correspond to a user's body shape, thereby fixing a user's movement to the chair during rehabilitation exercise.

In accordance with another aspect of the present invention, there is provided an exoskeleton-type rehabilitation robot system, including: a body part provided integrally with a chair to support the chair in which a user sits and provided with a robot arm capable of moving left or right based on the user seated on the chair; a conversion part configured to convert a position of the robot arm in a left or right direction with respect to the body part; a driving part provided with a plurality of driving links to articulate the robot arm with respect to the body part; and a controller configured to detect a position change in the left or right direction of the robot arm and control a driving force of the driving part in a driving mode respectively corresponding to the left or right direction position of the robot arm.

The body part may include: a robot body integrally provided to support a back of the chair; a connection link formed to protrude vertically upward from and connected to a center of the robot body; and the robot arm rotatably connected to the connection link, wherein the robot arm includes a first driving link whose one end is rotatably connected to the connection link, a second driving link whose one end is rotatably connected to another end of the first driving link, a third driving link whose one end is rotatably connected to another end of the second driving link, and a fourth driving link whose one end is rotatably connected to another end of the third driving link.

In addition, the fourth driving link may be rotatably connected to a cradle on which user's arm is placed.

In addition, the conversion part may include: a connection member provided between the connection link and the robot arm to be movable integrally with the robot arm; at least one tightening lever formed to protrude toward the connection link with respect to the connection member and rotatably provided integrally with the first driving link; first and second lever grooves provided on the connection link such that the tightening lever can be inserted, wherein at least one of the first and second lever grooves is provided on left and right sides to face each other with a rotation center of the connection link interposed therebetween; and a positioning pin provided to protrude from the connection link so as to be guided along a guide rail provided on the connection member and to determine a rotational position of the robot arm by limiting a rotation range of the robot arm having the connection member.

In addition, the connection member may be rotatably connected to the end of the connection link by a bearing, and the bearing may include a cross roller bearing.

In addition, the position of the robot arm may be adjusted in up and down, forward and backward, and left and right directions based on the chair in response to a body shape of the user.

In addition, the driving part may include: a first driving member provided between the first driving link and a connection link of the second driving link to provide rotatory power thereto; a second driving member provided between the second and third driving links o provide rotatory power thereto; a third driving member provided between the third and fourth driving links to provide rotatory power thereto; and a fourth driving member provided between the fourth driving link and the cradle to provide rotatory power thereto, wherein the first to fourth driving links have a bar shape extending in a longitudinal direction or a bent shape.

In addition, the controller may include: a sensing part configured to detect that the tightening lever is inserted into one of the first and second lever grooves; and a signal input part configured to provide a driving signal to the driving part with information sensed from the sensing part.

In addition, the sensing part may include: a first sensor prepared to correspond to a left direction position of the robot arm; a second sensor prepared to correspond to a right direction position of the robot arm; and a sensing member configured to detect a left or right direction driving posture of the robot arm by interfering with one of the first and second sensors.

In addition, the sensing member may include a trigger provided to interlock with the connection member and movable between the first and second sensors.

In addition, the first and second sensors may detect the sensing member by physical contact or by a proximity sensing method, an optical sensing method or a magnetic sensing method, and the sensing member may be provided by coloring a partial area of the robot arm or provided to protrude or be recessed from the robot arm.

In addition, when a left or right position of the robot arm is detected, the controller may rotationally drive the fourth driving member, and then rotationally drives the first and second driving members, and, when the driving of the first and second driving members is completed, the controller may rotate each of the second and third driving members while continuously driving the first driving member, and then drives the third driving member to set a driving posture.

In addition, the chair may be provided with a belt adjustable in a longitudinal direction to correspond to a user's body shape, thereby fixing a user's movement to the chair during rehabilitation exercise.

### [Advantageous effects]

According to the present invention having the configuration as described above, an exoskeleton-type rehabilitation robot system is provided integrally with a chair, thereby improving system space efficiency. That is, there is no need to lengthily design existing left and right guides to implement the left and right movements of a robot arm, so the space utilization efficiency of a system can be increased compared to limited training places.

In addition, left or right driving can be converted and automatically set with a single robot arm by a simple operation, reducing the system preparation time for rehabilitation exercises and improving efficiency.

### [Description of Drawings]

FIG. 1 is a perspective view schematically illustrating an initial driving setting state of an exoskeleton-type rehabilitation robot system according to a preferred embodiment of the present invention.
FIG. 2 is an enlarged perspective view schematically illustrating a driving part of the exoskeleton-type rehabilitation robot system illustrated in FIG. 1.
FIG. 3 is a plan view schematically illustrating the exoskeleton-type rehabilitation robot system illustrated in FIG. 1 viewed from above.
FIG. 4 is a perspective view schematically illustrating a main part of the exoskeleton-type rehabilitation robot system illustrated in FIG. 1 viewed from the side.
FIG. 5 s a cross-sectional view of a main part schematically cut away from the conversion part of FIG. 4.
FIG. 6 is a plan view schematically illustrating the conversion part of the exoskeleton-type rehabilitation robot system illustrated in FIG. 5.
FIG. 7 is a plan view schematically illustrating a controller of the exoskeleton-type rehabilitation robot system illustrated in FIG. 1.
FIG. 8 is a perspective view schematically illustrating a state in which driving from right to left of the exoskeleton-type rehabilitation robot system illustrated in FIG. 1 is set.
FIG. 9 is a perspective view schematically illustrating a driving state of a fourth driving member of the exoskeleton-type rehabilitation robot system illustrated in FIG. 8.
FIG. 10 is a perspective view schematically illustrating a driving state of first and second driving members of the exoskeleton-type rehabilitation robot system illustrated in FIG. 8.
FIG. 11 is a perspective view schematically illustrating a driving state of a first driving member of the exoskeleton-type rehabilitation robot system illustrated in FIG. 8.
FIG. 12 is a perspective view schematically illustrating a driving state of second and third driving members in a continuous driving state of a first driving member of the exoskeleton-type rehabilitation robot system illustrated in FIG. 8.
FIG. 13 is a perspective view schematically illustrating FIG. 12 viewed from another direction.
FIG. 14 is a perspective view schematically illustrating a driving state of first, second, and third driving members of the exoskeleton-type rehabilitation robot system illustrated in FIG. 8.
FIG. 15 is a perspective view schematically illustrating FIG. 14 viewed from another side.
FIG. 16 is a perspective view schematically illustrating a driving state of a third driving member of the exoskeleton-type rehabilitation robot system illustrated in FIG. 8.
FIG. 17 is a perspective view schematically illustrating FIG. 16 viewed from another side.

### [Best Mode]

Hereinafter, a preferred embodiment of the present invention will be described with reference to the accompanying drawings. However, the idea of the present invention is not limited to such an embodiment, and the idea of the present invention may be proposed differently by adding, changing, or deleting components constituting an embodiment, but this is also included in the idea of the invention.

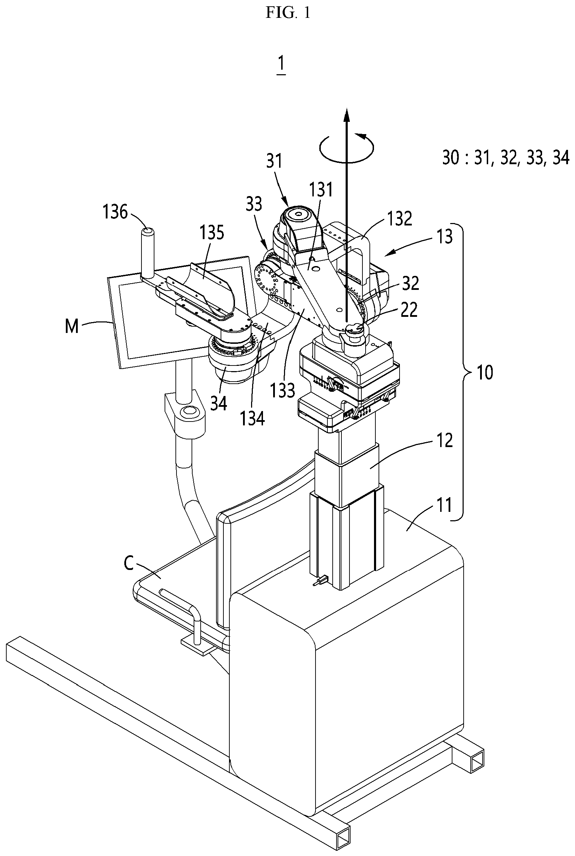

Referring to FIG. 1, an exoskeleton-type rehabilitation robot system 1 according to a preferred embodiment of the present invention includes the exoskeleton-type rehabilitation robot system 1 includes a body part 10, a conversion part 20, a driving part 30 and a controller 40.

For reference, the exoskeleton-type rehabilitation robot system 1 described in the present invention is exemplified as being applied to the rehabilitation exercise of the left arm and right arm of a patient in need of rehabilitation treatment, i.e., upper extremity rehabilitation training. However, it is not necessarily limited to this, and it is natural that the exoskeleton-type rehabilitation robot system 1 according to the present invention may be applied not only to the upper extremity but also to lower extremity rehabilitation training such as the left and right feet.

The body part 10 is provided on a chair C on which a user sits, and includes a robot body 11, a connection link 12 and a robot arm 13.

The robot body 11 is integrally provided with the chair C. As shown in 1, the robot body 11 is provided behind the chair C and can integrally support the chair C.

For reference, wheels (not shown) for moving the position of the robot body 11 integrally provided with the chair C may be provided on the bottom of the robot body 11, and the shape and size of the robot body 11 are not limited to the illustrated embodiment.

In addition, the chair C is provided with a belt (not shown) for fixing a seated user. The belt (not shown) is integrally provided with the chair C and can be adjusted in a longitudinal direction, so that it can be worn according to a user's body shape. Here, unlike a car seat belt, the belt (not shown) is provided for the purpose of continuously firmly fixing the seated user to the chair C during exercise.

One end of the connection link 12 is connected so as to protrude vertically upward from the robot body 11. More specifically, the connection link 12 protrudes vertically upward from the center of the top of the robot body 11, and a first driving link 131 to be described below is linked to the protruding top. The connection link 12 is a kind of linear column, and the robot arm 13, which will be described below, is linked to an upper part of the connection link 12.

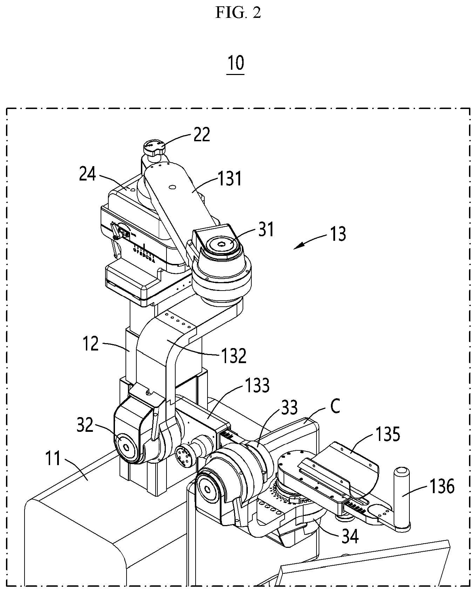

The robot arm 13 may move left or right (R) (L) based on a user seated on the chair C. As shown in FIG. 2, the robot arm 13 includes first to fourth driving links 131, 132, 133 and 134 and a cradle 135.
the first to fourth driving links 131, 132, 133 and 134 are sequentially rotatably connected to the connection link 12 to enable joint movement. More specifically, one end of the first driving link 131 is rotatably connected to a protruding upper end of the connection link 12. Another end of the first driving link 131 extending the end of the first driving link 131 is rotatably connected to an end of the second driving link 132. Another end of the second driving link 132 is rotatably connected to an end of the third driving link 133, and an end of the fourth driving link 134 is rotatably connected to another end of the third driving link 133.

Here, the first and third driving links 131 and 133 have a bar shape extending in a longitudinal direction, and the second and fourth driving links 132 and 134 have a bent shape like a letter "L." The shapes, lengths and thicknesses of the first to fourth driving links 131, 132, 133 and 134 are examples, and are not limited to the illustrated examples.

Meanwhile, the fourth driving link 134 is provided with the cradle 135 where the user's arm can be seated and mounted. Here, the cradle 135 may be able to rotate with respect to the fourth driving link 134, and a handle 136 grippable by a user may be provided.

For reference, the robot arm 13 may be adjusted up and down, forward and backward, and left and right within a certain range, as shown by the arrow in FIG. 1, based on the state in which the user is seated in the chair C, considering the user's body shape. Here, the purpose of adjusting the robot arm 13 up and down, front and back, and left and right is to move the robot arm 13 to a position where rehabilitation is possible in response to physical conditions such as the height, obesity and twisted posture of a user. For this, an embodiment in which the position of the chair C instead of the robot arm 13 is adjusted up and down, forward and backward, and left and right in response to the user's physical condition is also possible.

The positional movement of the robot arm 13 should be within a range to avoid interference with surrounding components such as the chair C during transformation. For example, the up and down directions of the robot arm 13 may be adjusted at a height that does not interfere with the chair C during left and right transformation. In this embodiment, the connection link 12 including a linear column moves in up and down directions to adjust the position of the robot arm 13 up and down. Meanwhile, to guide the position adjustment of the robot arm 13, the connection link 12 is provided with a scale 121 and a locking means 122. The position of the robot arm 13 may be adjusted by operating or unlocking the locking means 122 along the scale 121 provided in the connection link 12.

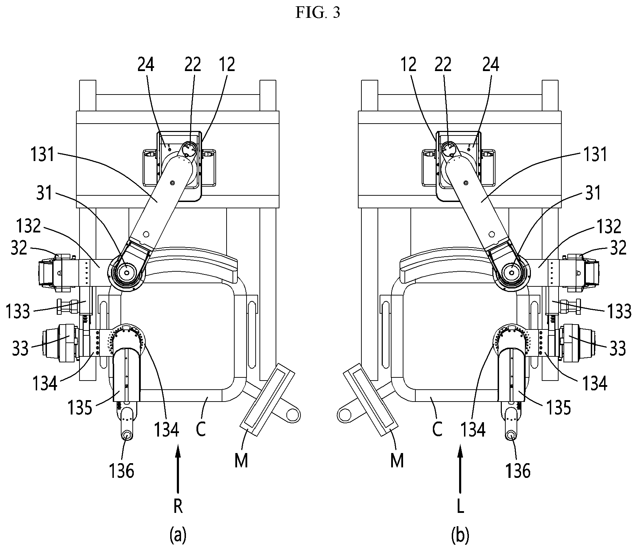

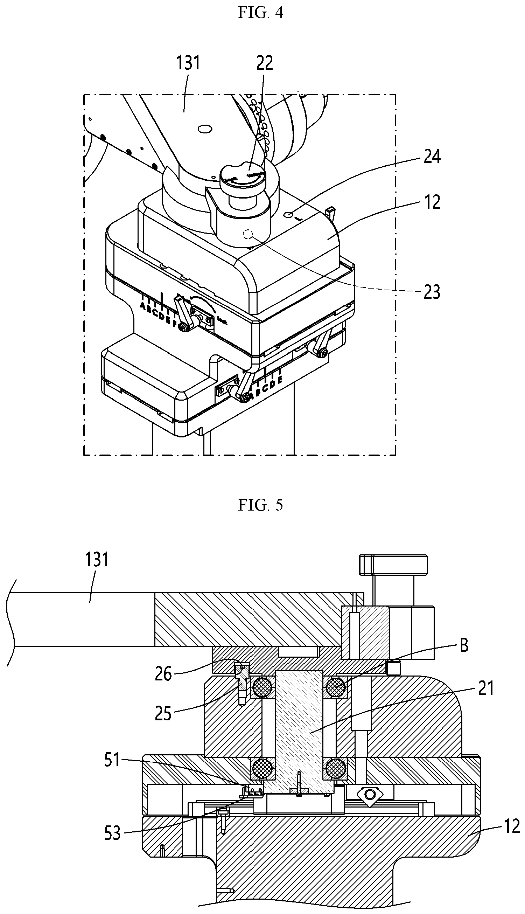

The conversion part 20 converts the position of the robot arm 13 with respect to the body part 10. That is, the conversion part 20 converts a driving position of the robot arm 13 with respect to the robot body 11 in a right direction (R) with respect to a user as shown in FIG. 3(a) and in a left direction (R) with respect to the user as shown in FIG. 3(b). As shown in FIGS. 4 to 7, the conversion part 20 includes a connection member 21, a tightening lever 22, first and second lever grooves 23 and 24 and a positioning pin 25.

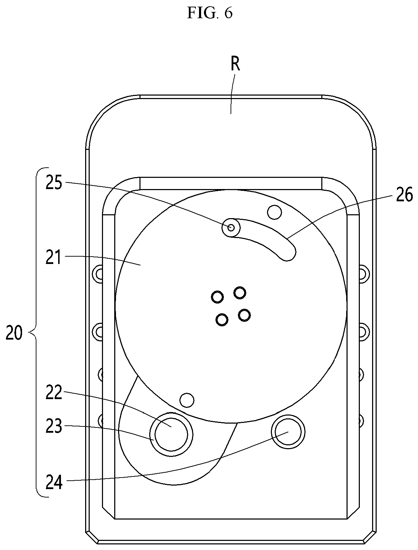

As shown in FIGS. 5 and 6, the connection member 21 is provided between the connection link 12 and the robot arm 13 to be movable integrally with the robot arm 13. In this embodiment, the connection member 21 is provided on the first driving link 131 of the robot arm 13 so as to face the connection link 12.

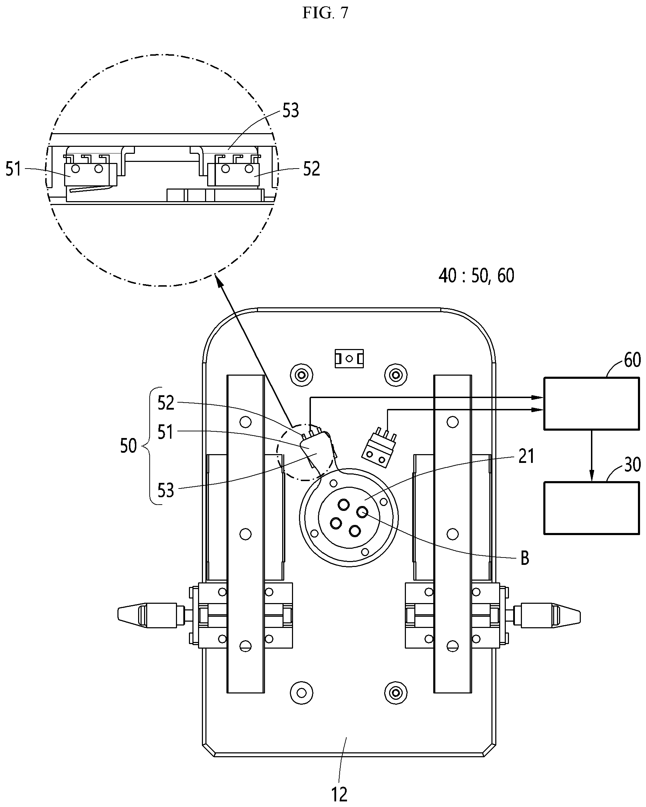

Meanwhile, the connection member 21 is provided with a plurality of bearings B interposed therebetween as shown in FIG. 7, so is rotatable with respect to the connection link 12 in conjunction with the rotation of the first driving link 131 coupled to the upper end of the connection link 12. For reference, the bearings B may include a ball bearing or a cross roller bearing, and is exemplified as including a cross roller bearing in this embodiment.

As shown in FIG. 4, the tightening lever 22 protrudes toward the connection link 12 with respect to the connection member 21, and at least one tightening lever 22 is rotatably provided integrally with the robot arm 13. Here, the tightening lever 22 is separated from or inserted into the first and second lever grooves 23 and 24 to be described below. For this, the tightening lever 22 can be provided on the connection member 21 to be raised and lowered in a direction of entering toward and separating from the first and second lever grooves 23 and 24.

In this embodiment, the tightening lever 22 is a kind of position-fixing guide for changing the left (L) and right (R) positions of the robot arm 13, and may be changed to one of various position-fixing parts, such as a plunger, instead of the tightening lever 22.

The first and second lever grooves 23 and 24 are inserted into the connection link 12 by a predetermined depth so that the tightening lever 22 can be inserted, and at least one of the first and second lever grooves 23 and 24 is provided on each of left and right sides so as to face each other with the center of rotation of the robot arm 13 with respect to the connection link 12 therebetween. In this embodiment, the first and second lever grooves 23 and 24 are exemplified as being respectively provided on the left and right sides to respectively correspond to the left (L) and right (R) directions of the robot arm 13 as shown in FIG. 4. That is, it is exemplified that, based on the user seated in the chair C, a first lever groove 23 is provided on the left side, and a second lever groove 24 is provided on the right side.

By inserting/separating the tightening lever 22 into/from one of the first and second lever grooves 23 and 24 provided on the left and right sides, the robot arm 13 integrally provided with the connection member 21 provided with the tightening lever 22 changes posture thereof. That is, when the tightening lever 22 is inserted into the first lever groove 23, the robot arm 13 shifts the posture thereof to a right direction R and a driving thereof is set. Conversely, when the tightening lever 22 is inserted into the second lever groove 24, the robot arm 13 shifts the posture thereof in a left direction L and a driving thereof is set.

The positioning pin 25 protrudes from the connection link 12 so as to be guided along a guide rail 26 provided on the connection member 21. The positioning pin 25 determines the rotational position of the robot arm 13 by limiting a rotational range of the robot arm 13 including the connection member 21 by the guide rail 26.

More specifically, the guide rail 26 penetrates the connection member 21 and is provided to have a predetermined rotation radius, and protrudes from an upper end of the connection link 12 such that the positioning pin 25 is inserted into the guide rail 26. Accordingly, when the connection member 21 is rotated in conjunction with the first driving link 131, the position where the positioning pin 25 is inserted into the guide rail 26 is changed. In addition, since the positioning pin 25 is inserted into the guide rail 26 and the rotation range is disturbed, the rotation radius of the first driving link 131 driven integrally with the connection member 21 provided with the positioning pin 25 is limited.

For reference, the rotation range of the positioning pin 25 inserted into the guide rail 26 is limited by the guide rail 26 by a rotation radius corresponding to driving positions of a left direction L and right direction R of the robot arm 13.

As the tightening lever 22 of the conversion part 20 is inserted into and tightened and fixed to any one of a plurality of lever grooves 23 and 24, the left direction L and right direction driving of the robot arm 13 is converted.

The driving part 30 multi-directionally articulates the robot arm 13 with respect to the body part 10. To articulate the robot arm 13 provided with a plurality of plural driving links 131, 132, 133 and 134, the driving part 30 may be provided with the first to fourth driving members 31, 32, 33 and 34. For reference, in this embodiment, the driving part 30 is exemplified as including the first to fourth driving links 131, 132, 133 and 134 and the first to fourth driving members 31, 32, 33 and 34 respectively provided at the connection part of the cradle 135 as the robot arm 13 is shown and exemplified as including the first to fourth driving links 131, 132, 133 and 134 and the cradle 135. It is natural that the number and location of the driving members 31, 32, 33 and 34 of the driving part 30 are not limited to the illustrated example.

The first driving member 31 is provided between the first driving link 131 and the second driving link 132 to provide rotatory power. The second driving member 32 is provided between the second and third driving links 132 and 133 to provide rotatory power, and the third driving member 33 is provided between the third and fourth driving links 133 and 134 to provide driving power. In addition, the fourth driving member 34 is provided between the fourth driving link 134 and the cradle 135 to provide rotatory power. The first to fourth driving members 31, 32, 33 and 34 may include a driving force-generating means such as a motor, but are not limited thereto.

The controller 40 senses a position change in the left or right directions R and L of the robot arm 13 and controls the driving mode of the driving part 30 to be automatically changed according to the position of the robot arm 13. For this, the controller 40 includes a sensing part 50 and an input part 60.

The sensing part 50 detects that the tightening lever 22 is inserted into any one of the first and second lever grooves 23 and 24 and the position of the robot arm 13 is changed. For this, the sensing part 50 includes a first sensor 51, a second sensor 52 and a sensing member 53 as shown in FIG. 7.

The first sensor 51 is prepared to correspond to a left direction L position of the robot arm 13. The second sensor 52 is prepared to correspond to a right direction R position of the robot arm 13. The first and second sensors 51 and 52 are a kind of limit switches and sense the sensing member 53 to be described below.

The sensing member 53 is integrally movable together with the connection member 21 so as to be movable between the first and second sensors 51 and 52. Here, the connection member 21 may include a trigger capable of rotating with respect to the connection link 12 in association with rotation of the first driving link 131, as described above. Accordingly, the position of the sensing member 53 is changed to face one of the first and second sensors 51 and 52 in conjunction with the movement of the connection link 12, so that the sensing member 53 is sensed by one of the first and second sensors 51 and 52.

For reference, the sensing member 53 is provided to selectively pressurize the first and second sensors 51 and 52, so that the first and second sensors 51 and 52 can sense a sensing member 53. That is, a driving signal may be input by the sensing member 53 pressing the first and second sensors 51 and 52. However, the sensing operation between the sensing member 53 and the first and second sensors 51 and 52 is not necessarily limited to pressurized interference, and it is natural that it may be changed by various interference methods such as a photo sensor.

In this way, a change in the left direction L or right direction R position of the robot arm 13 connected to the connection link 12 is sensed due to the sensing member 53 disturbed by any one of the first and second sensors 51 and 52.

Meanwhile, the first and second sensors 51 and 52 may sense the movement of the sensing member 53 by physical contact and sense the sensing member 53 in a proximity method, an optical method, or a magnetic method. In addition, the sensing part 50 may sense the movement of the robot arm 13 using the principle of an optical encoder.

When the principle of an optical encoder is used, the movement area such as the boss of the rotation axis of the robot arm 13 is colored and distinguished by color, and the movement of the robot arm 13 may be detected by detecting the coloration according to the movement of the robot arm 13 by the first and second sensors 51 and 52 including an optical sensor. Alternatively, a modified example of sensing the movement of the robot arm 13 with the first and second sensors 51 and 52 including a proximity sensor by relatively protruding or sinking a part of the robot arm 13 without coloring is also possible. That is, in the sensing part 50 to which the optical encoder principle is applied, the sensing member 53 is provided with a colored portion of the robot arm 13 or is relatively protruded or recessed, and the first and second sensors 51 and 52 include an optical or proximity sensor and sense the sensing member 53.

The input part 60 provides a driving signal to the driving part 30 with information detected by the sensing part 50. The input part 60 is connected to the first to fourth driving members 31, 32, 33 and 34 of the driving part 30 to input driving force. Accordingly, the input part 60 may automatically control drive force conversion for the first to fourth driving members 31, 32, 33 and 34 in conjunction with a change in the left direction L or a right direction R position of the robot arm 13 sensed by the sensing part 50.

Meanwhile, the chair C where a user sits may be provided with a monitor M that can control and check the operation of the exoskeleton-type rehabilitation robot system 1 in real-time, as shown in FIG. 1. For this, the user may directly turn on/off the driving through the monitor M or check the driving status with the naked eye.

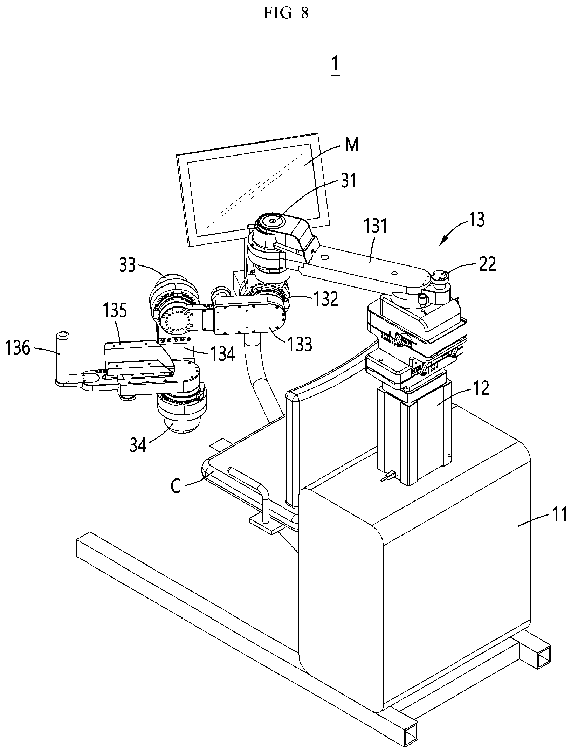

Driving setting operations in the left direction L and right direction R of the exoskeleton-type rehabilitation robot system 1 according to the present invention having the configuration as described above are described with reference to FIGS. 8 to 17.

For reference, FIG. 1 schematically illustrates an initial posture of an exoskeleton-type rehabilitation robot system 1 according to an embodiment. Here, the tightening lever 22 is inserted into the first lever groove 23, and the robot arm 13 is set to drive in a right direction R.

As shown in FIG. 8, based on the user seated in the chair C, the posture of the robot arm 13 is converted from right to left, i.e., from the right direction R to the left direction L. Here, the user separates the tightening lever 22 from the first lever groove 23 and inserts it into the second lever groove 24. In conjunction with the movement of the tightening lever 22, the robot arm 13, which can rotate integrally with the connection member 21 provided with the tightening lever 22, also rotates together.

The sensing member 53 of the sensing part 50 is also rotated in conjunction with the rotation of the connection member 21 and the robot arm 13, so that the first or second sensor 51 and 52 senses the position of the sensing member 53. Here, the sensing member 53 is sensed by the first sensor 51 in conjunction with the position change of the robot arm 13 to the left direction. When a change in the left direction L position of the robot arm 13 is detected by the first sensor 51 of the sensing part 50, the input part 60 automatically inputs a driving force input signal to the first to fourth driving members 31, 32, 33 and 34 of the driving part 30 and automatically sets them to a left direction L driving mode. Here, may pressurize and interfere with the first sensor 51.

When the input part 60 of the controller 40 recognizes the left direction L driving of the robot arm 13 due to interference between the sensing member 53 and the first sensor 51, a left direction L driving setting for the user's left arm rehabilitation training is automatically performed in the following order.

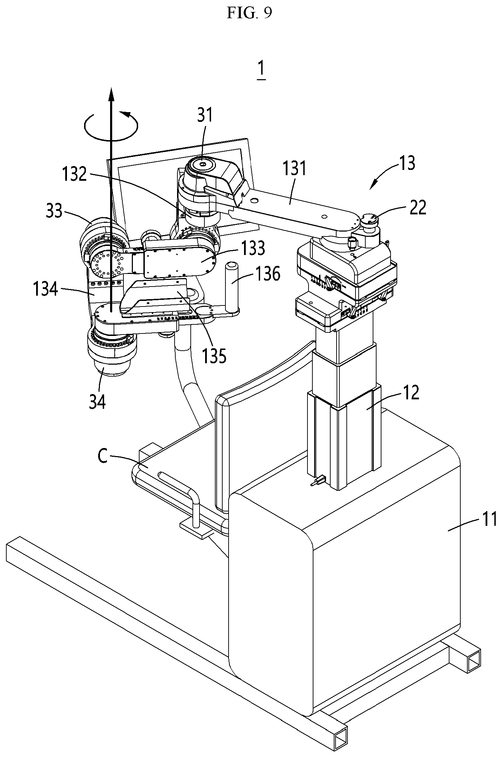

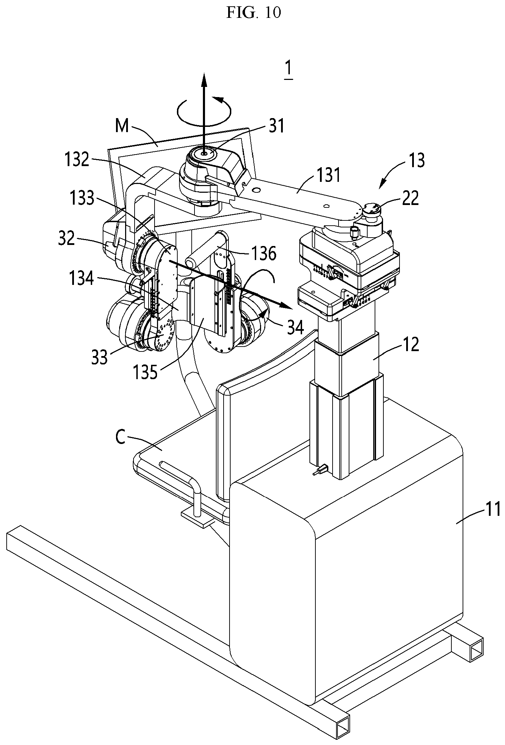

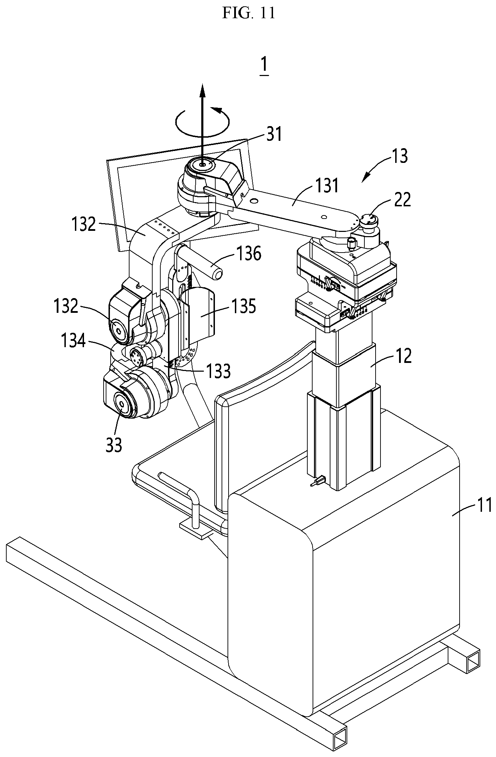

First, the fourth driving member 34 is rotationally driven around a driving shaft as shown in FIG. 9, and then the driving force input is controlled by the input part 60 so that the first and second driving members 31 and 32 are also rotationally driven around each driving shaft as shown in FIG. 10. Next, the driving force input is controlled by the input part 60 such that only the first driving member 31 is continuously driven to rotate around the driving shaft as shown in FIG. 11.

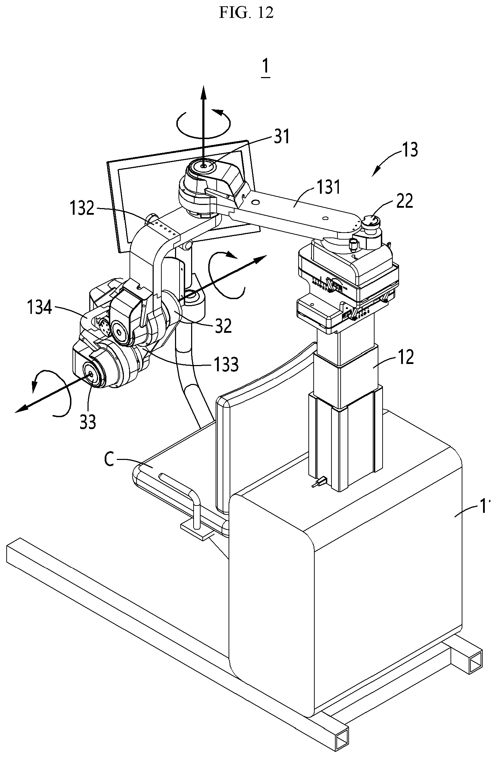

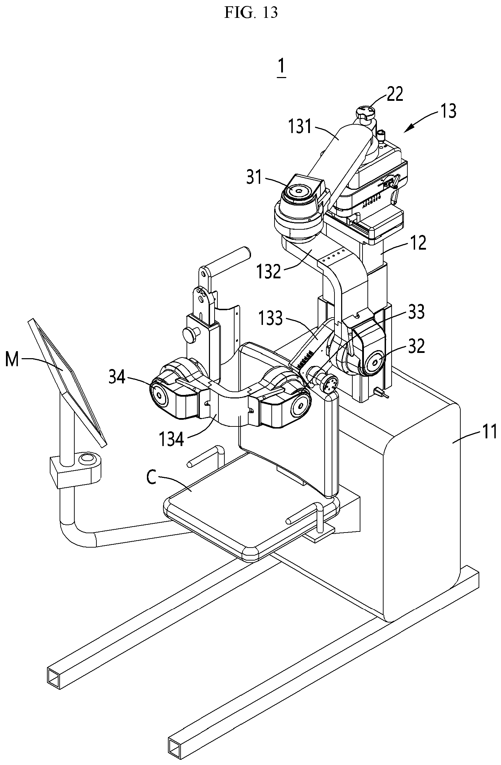

Next, the first and the second driving members 31 and 32 are controlled to be rotationally driven around each driving shaft in a state in which the first driving member 31 is controlled to be continuously driven as shown in FIG. 12. The robot arm 13 of FIG. 12 viewed from another direction is illustrated in FIG. 13.

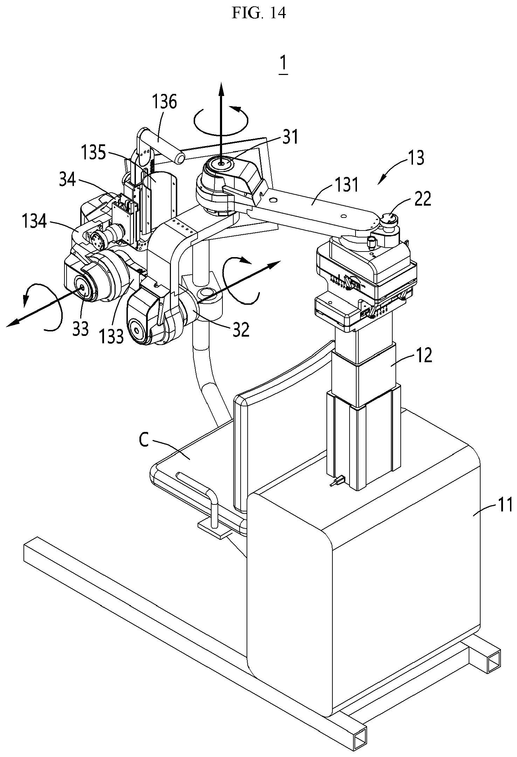

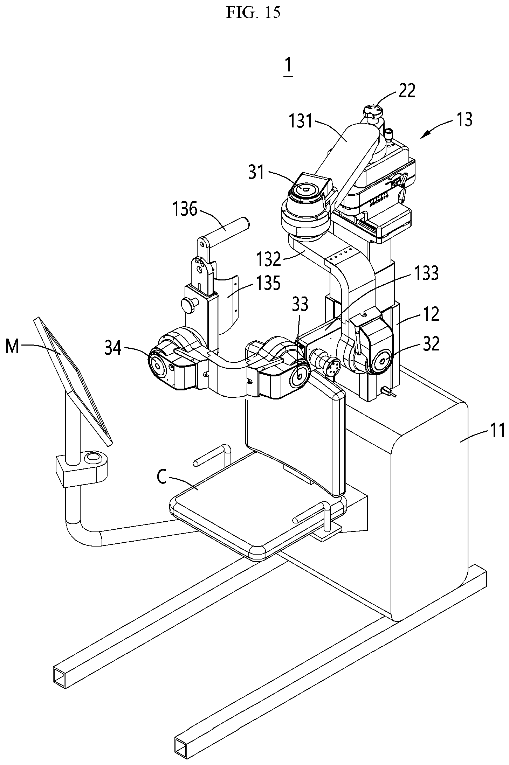

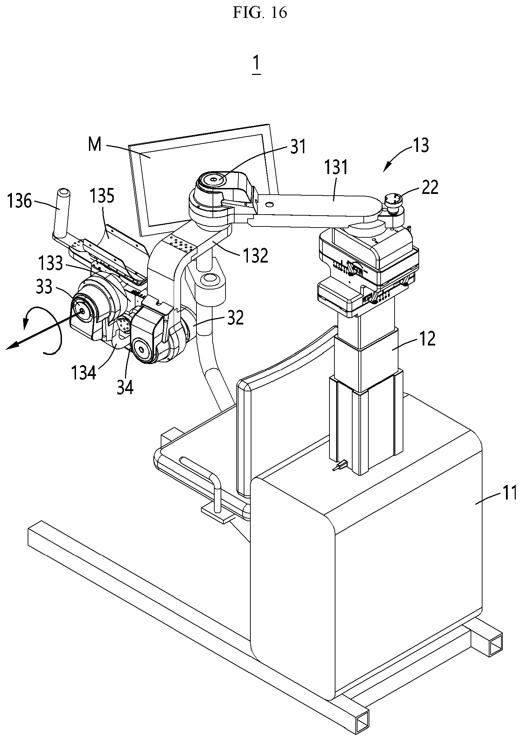

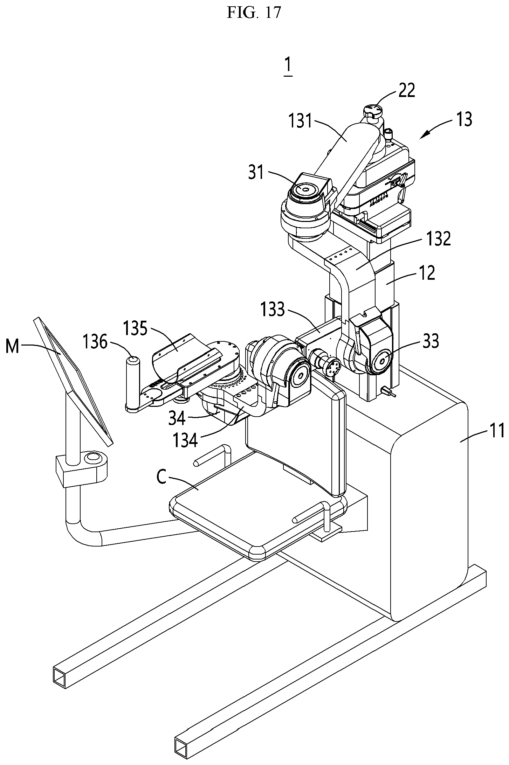

Next, the input part 60 controls the first to third driving members 31, 32, and 33 to keep running as shown in FIG. 14, and, finally, drives the third driving member 33 to finally complete the driving posture setting of the robot arm 13 for the left arm as shown in FIG. 16. Here, FIGS. 15 and 17 schematically illustrate the robot arm 13, respectively shown in FIGS. 14 and 15, viewed from another side

In this way, the controller 40 automatically controls the driving force of the first to fourth driving members 31, 32, 33 and 34 of the driving part 30 by sensing that the robot arm 13 moves in a left direction L. Accordingly, When the left direction L driving of the robot arm 13 is finally set, the user may proceed with rehabilitation training exercise after resting the left arm on the cradle 135.

Meanwhile, when the user wants to proceed with rehabilitation exercise for the right arm, the tightening lever 22 is separated from the first lever groove 23 and inserted into the second lever groove 24 as shown in FIG. 4. Here, the turning radius of the tightening lever 22 is disturbed by the turning radius of the positioning pin 25 which is disturbed by the guide rail 26 provided on the connection member 21 as shown in FIG. 6.

The posture change of the robot arm 13 connected in conjunction with the insertion operation of the tightening lever 22 into the second lever groove 24 is detected by the second sensor 52 as interference with the sensing member 53 (see FIG. 7). When the R posture conversion in the right direction of the robot arm 13 is detected by the sensing part 50 in such a manner, the input part 60 controls driving of the first to fourth driving members 31, 32, 33 and 34 to automatically set the driving posture in the right direction R in the same order as in FIGS. 8 to 17.

Meanwhile, the exoskeleton-type rehabilitation robot system 1 according to the present invention can be prepared to provide upper extremity rehabilitation exercises for patients with stroke, etc. The exoskeleton-type rehabilitation robot system 1 should exercise the upper extremity (arm) in the left or right direction L or R according to the patient's condition, and the exoskeleton-type rehabilitation robot system 1 should be able to respond to this.

The present invention designed a rotational degree of freedom at the center of the back of the exoskeleton-type rehabilitation robot system 1 for left and right conversion, and the first and second sensors 51 and 52 mounted in each direction generate signals through interference with the sensing member 53. The signal generated in such a manner determines the left and right driving mode of the exoskeleton-type rehabilitation robot system 1.

When the left or right L or R driving is determined, the posture is automatically set to allow training of both arms through the position control of the specific joint of the robot arm 13. Therefore, high usability can be provided in a training preparation process of users such as rehabilitation therapists using the exoskeleton-type rehabilitation robot system 1 according to the present invention.

As described above, although it has been described with reference to the preferred embodiment of the present invention, those skilled in the art will understand that the present invention can be modified and changed in various ways without departing from the scope of the present invention disclosed in the accompanying claims.

## Claims

1. An exoskeleton-type rehabilitation robot system, comprising:
a body part (10) provided on a chair (C) in which a user sits and provided with a robot arm (13) capable of moving left or right based on the user seated on the chair;
a conversion part (20) configured to convert a position of the robot arm (13) with respect to the body part (10);
a driving part (30) configured to articulate the robot arm (13) with respect to the body part (10); and
a controller (40) configured to detect a change in a position of the robot arm (13) and control a left or right driving mode of the driving part (30) according to the position of the robot arm (13),
wherein the body part (10) comprises:
a robot body (11) integrally provided to support the chair (C);
a connection link (12) formed to protrude vertically upward from and connected to the robot body (11); and
the robot arm (13) rotatably connected to the connection link (12) and provided with a plurality of driving links (131, 132, 133, 134) capable of performing joint motion,
wherein the conversion part (20) comprises:
a connection member (21) provided between the connection link (12) and the robot arm (13) to be movable integrally with the robot arm (13);
at least one tightening lever (22) configured to protrude toward the connection link (12) with respect to the connection member (21) and provided to be integrally rotatable with the robot arm (13);
first and second lever grooves (23, 24) provided on the connection link (12) such that the tightening lever (22) is inserted thereinto, at least one of the first and second lever grooves (23, 24) being respectively provided on left and right sides to face each other with a rotation center of the connection link (12) interposed therebetween; and
a positioning pin (25) provided to protrude from the connection link (12) so as to be guided along a guide rail (26) provided on the connection member (21) and configured to determine a rotational position of the robot arm (13) by limiting a rotation range of the robot arm (13) having the connection member (21),
wherein a left and right driving mode of the robot arm (13) is automatically converted in conjunction with the tightening lever (22) inserted into one of the first and second lever grooves (23, 24) and tightened and fixed,
**characterized in that**
the controller (40) comprises:
a sensing part (50) configured to detect that the tightening lever (22) is inserted into one of the first and second lever grooves (23, 24); and
a signal input part (60) configured to provide a driving signal to the driving part (30) with information sensed from the sensing part (50).

2. The exoskeleton-type rehabilitation robot system according to claim 1, wherein the position of the robot arm (13) is adjusted in up and down, forward and backward, and left and right directions based on the chair (C) in response to a body shape of the user.

3. The exoskeleton-type rehabilitation robot system according to claim 1, wherein the connection member (21) is rotatably connected to an end of the connection link (12) by a bearing, and the bearing comprises a cross roller bearing.

4. The exoskeleton-type rehabilitation robot system according to claim 1, wherein the robot arm (13) comprises:
a first driving link (131) whose one end is rotatably connected to the connection link (12);
a second driving link (132) whose one end is rotatably connected to another end of the first driving link (131);
a third driving link (133) whose one end is rotatably connected to another end of the second driving link (132); and
a fourth driving link (134) whose one end is rotatably connected to another end of the third driving link (133),
wherein the fourth driving link (134) is rotatably connected to a cradle (135) on which user's arm is placed.

5. The exoskeleton-type rehabilitation robot system according to claim 4, wherein the driving part (30) comprises:
a first driving member (31) provided between the first driving link (131) and a connection link of the second driving link (132) to provide rotatory power thereto;
a second driving member (32) provided between the second and third driving links (132, 133) to provide rotatory power thereto;
a third driving member (33) provided between the third and fourth driving links (133, 134) to provide rotatory power thereto; and
a fourth driving member (34) provided between the fourth driving link (134) and the cradle (135) to provide rotatory power thereto.

6. The exoskeleton-type rehabilitation robot system according to claim 4, wherein the first to fourth driving links (131, 132, 133, 134) have a bar shape extending in a longitudinal direction or a bent shape.

7. The exoskeleton-type rehabilitation robot system according to claim 1, wherein the sensing part comprises:
a first sensor (51) prepared to correspond to a left direction position of the robot arm (13);
a second sensor prepared to correspond to a right direction position of the robot arm (13); and
a sensing member configured to detect a left or right direction driving posture of the robot arm (13) by interfering with one of the first and second sensors (51, 52).

8. The exoskeleton-type rehabilitation robot system according to claim 7, wherein the sensing member (53) comprises a trigger provided to interlock with the connection member (21) and movable between the first and second sensors (51, 52).

9. The exoskeleton-type rehabilitation robot system according to claim 7, wherein the first and second sensors (51, 52) detect the sensing member (53) by physical contact or by a proximity sensing method, an optical sensing method or a magnetic sensing method, and
the sensing member (53) is provided by coloring a partial area of the robot arm (13) or provided to protrude or be recessed from the robot arm (13).

10. The exoskeleton-type rehabilitation robot system according to claim 5, wherein when a left or right position of the robot arm (13) is detected, the controller (40) rotationally drives the fourth driving member (34), and then rotationally drives the first and second driving members (31, 32), and, when the driving of the first and second driving members (31, 32) is completed, the controller (40) rotates each of the second and third driving members (32, 33) while continuously driving the first driving member (31), and then drives the third driving member (33) to set a driving posture.

11. The exoskeleton-type rehabilitation robot system according to claim 1, wherein the chair (C) is provided with a belt adjustable in a longitudinal direction to correspond to a user's body shape, thereby fixing a user's movement to the chair (C) during rehabilitation exercise.

## Patentansprüche

1. Rehabilitationsroboter-System vom Exoskelett-Typ, umfassend:
einen Körperteil (10), der an einem Stuhl (C) vorgesehen ist, in dem ein Nutzer sitzt, und der mit einem Roboterarm (13) versehen ist, der dazu in der Lage ist, sich basierend auf dem auf dem Stuhl sitzenden Nutzer nach links oder rechts zu bewegen;
einen Umwandlungsteil (20), der dazu konfiguriert ist, eine Position des Roboterarms (13) in Bezug auf den Körperteil (10) umzuwandeln;
einen Antriebsteil (30), der dazu konfiguriert ist, den Roboterarm (13) in Bezug auf den Körperteil (10) gelenkig zu bewegen; und
eine Steuerung (40), die dazu konfiguriert ist, eine Änderung einer Position des Roboterarms (13) zu erfassen und einen Links- oder Rechts-Antriebsmodus des Antriebsteils (30) entsprechend der Position des Roboterarms (13) zu steuern,
wobei der Körperteil (10) umfasst:
einen Roboterkörper (11), der integral vorgesehen ist, um den Stuhl (C) zu stützen;
ein Verbindungsglied (12), das ausgebildet ist, um vertikal nach oben ausgehend von dem Roboterkörper (11) vorzustehen, und mit diesem verbunden ist; und
den Roboterarm (13), der drehbar mit dem Verbindungsglied (12) verbunden ist und mit einer Vielzahl von Antriebsgliedern (131, 132, 133, 134) versehen ist, die zur Durchführung einer Gelenkbewegung in der Lage sind,
wobei der Umwandlungsteil (20) umfasst:
ein Verbindungselement (21), das zwischen dem Verbindungsglied (12) und dem Roboterarm (13) vorgesehen ist, um integral mit dem Roboterarm (13) beweglich zu sein;
mindestens einen Spannhebel (22), der dazu konfiguriert ist, in Bezug auf das Verbindungselement (21) zu dem Verbindungsglied (12) hin vorzustehen, und der vorgesehen ist, um integral mit dem Roboterarm (13) drehbar zu sein;
eine erste und eine zweite Hebelnut (23, 24), die derart an dem Verbindungsglied (12) vorgesehen sind, dass der Spannhebel (22) darin eingesetzt wird, wobei mindestens eine der ersten und zweiten Hebelnuten (23, 24), jeweils auf einer linken bzw. einer rechten Seite vorgesehen sind, um einander zugewandt zu sein, wobei ein Drehzentrum des Verbindungsglieds (12) dazwischen angeordnet ist; und
einen Positionierstift (25), der dazu vorgesehen ist, von dem Verbindungsglied (12) vorzustehen, um entlang einer an dem Verbindungselement (21) vorgesehenen Führungsschiene (26) geführt zu werden, und der dazu konfiguriert ist, eine Drehposition des Roboterarms (13) zu bestimmen, indem ein Drehbereich des Roboterarms (13), der das Verbindungselement (21) aufweist, begrenzt wird,
wobei ein Links- und Rechts-Antriebsmodus des Roboterarms (13) automatisch umgewandelt wird in Verbindung damit, dass der Spannhebel (22) in eine von der ersten und der zweiten Hebelnut (23, 24) eingesetzt sowie festgespannt und fixiert wird,
**dadurch gekennzeichnet, dass**
die Steuerung (40) umfasst:
einen Erfassungsteil (50), der dazu konfiguriert ist, zu erfassen, dass der Spannhebel (22) in eine von der ersten und der zweiten Hebelnut (23, 24) eingesetzt ist; und
einen Signaleingabeteil (60), der dazu konfiguriert ist, dem Antriebsteil (30) ein Antriebssignal mit von dem Erfassungsteil (50) erfassten Informationen bereitzustellen.

2. Rehabilitationsroboter-System vom Exoskelett-Typ nach Anspruch 1, wobei die Position des Roboterarms (13) in Aufwärts- und Abwärts-, Vorwärts- und Rückwärts- sowie Links- und Rechtsrichtung basierend auf dem Stuhl (C) entsprechend einer Körperform des Nutzers eingestellt wird.

3. Rehabilitationsroboter-System vom Exoskelett-Typ nach Anspruch 1, wobei das Verbindungselement (21) über ein Lager drehbar mit einem Ende des Verbindungsglieds (12) verbunden ist, und das Lager ein Kreuzrollenlager umfasst.

4. Rehabilitationsroboter-System vom Exoskelett-Typ nach Anspruch 1, wobei der Roboterarm (13) umfasst:
ein erstes Antriebsglied (131), dessen eines Ende drehbar mit dem Verbindungsglied (12) verbunden ist;
ein zweites Antriebsglied (132), dessen eines Ende drehbar mit einem anderen Ende des ersten Antriebsglieds (131) verbunden ist;
ein drittes Antriebsglied (133), dessen eines Ende drehbar mit einem anderen Ende des zweiten Antriebsglieds (132) verbunden ist; und
ein viertes Antriebsglied (134), dessen eines Ende drehbar mit einem anderen Ende des dritten Antriebsglieds (133) verbunden ist,
wobei das vierte Antriebsglied (134) drehbar mit einer Halterung (135) verbunden ist, auf welcher der Arm des Nutzers platziert wird.

5. Rehabilitationsroboter-System vom Exoskelett-Typ nach Anspruch 4, wobei der Antriebsteil (30) umfasst:
ein erstes Antriebselement (31), das zwischen dem ersten Antriebsglied (131) und einem Verbindungsglied des zweiten Antriebsglieds (132) vorgesehen ist, um diesen eine Drehkraft bereitzustellen;
ein zweites Antriebselement (32), das zwischen dem zweiten und dem dritten Antriebsglied (132, 133) vorgesehen ist, um diesen eine Drehkraft bereitzustellen;
ein drittes Antriebselement (33), das zwischen dem dritten und dem vierten Antriebsglied (133, 134) vorgesehen ist, um diesen eine Drehkraft bereitzustellen; und
ein viertes Antriebselement (34), das zwischen dem vierten Antriebsglied (134) und der Halterung (135) vorgesehen ist, um diesen eine Drehkraft bereitzustellen.

6. Rehabilitationsroboter-System vom Exoskelett-Typ nach Anspruch 4, wobei die ersten bis vierten Antriebsglieder (131, 132, 133, 134) eine sich in einer Längsrichtung erstreckende Stabform oder eine gebogene Form aufweisen.

7. Rehabilitationsroboter-System vom Exoskelett-Typ nach Anspruch 1, wobei der Erfassungsteil umfasst:
einen ersten Sensor (51), der dazu vorbereitet ist, einer Position des Roboterarms (13) in Linksrichtung zu entsprechen,
einen zweiten Sensor, der dazu vorbereitet ist, einer Position des Roboterarms (13) in Rechtsrichtung zu entsprechen; und
ein Erfassungselement, das dazu konfiguriert ist, eine Antriebsstellung des Roboterarms (13) in Links- oder Rechtsrichtung zu erfassen, indem es mit einem von dem ersten und dem zweiten Sensor (51, 52) interferiert.

8. Rehabilitationsroboter-System vom Exoskelett-Typ nach Anspruch 7, wobei das Erfassungselement (53) einen Auslöser umfasst, der dazu vorgesehen ist, mit dem Verbindungselement (21) in Eingriff zu stehen, und der zwischen dem ersten und dem zweiten Sensor (51, 52) beweglich ist.

9. Rehabilitationsroboter-System vom Exoskelett-Typ nach Anspruch 7, wobei der erste und der zweite Sensor (51, 52) das Erfassungselement (53) durch physischen Kontakt oder durch ein Annäherungserfassungsverfahren, ein optisches Erfassungsverfahren oder ein magnetisches Erfassungsverfahren erfassen, und
das Erfassungselement (53) durch Einfärben eines Teilbereichs des Roboterarms (13) bereitgestellt ist oder dazu vorgesehen ist, von dem Roboterarm (13) vorstehend oder gegenüber diesem zurückgesetzt vorgesehen zu sein.

10. Rehabilitationsroboter-System vom Exoskelett-Typ nach Anspruch 5, wobei, wenn eine Links- oder Rechtsposition des Roboterarms (13) erfasst wird, die Steuerung (40) das vierte Antriebselement (34) drehend antreibt und anschließend das erste und das zweite Antriebselement (31, 32) drehend antreibt, und, wenn der Antrieb des ersten und des zweiten Antriebselements (31, 32) abgeschlossen ist, die Steuerung (40) das zweite und das dritte Antriebselement (32, 33) jeweils dreht, während sie fortlaufend das erste Antriebselement (31) antreibt, und anschließend das dritte Antriebselement (33) antreibt, um eine Antriebsstellung einzustellen.

11. Rehabilitationsroboter-System vom Exoskelett-Typ nach Anspruch 1, wobei der Stuhl (C) mit einem in einer Längsrichtung einstellbaren Gurt versehen ist, um einer Körperform eines Nutzers zu entsprechen, wodurch eine Bewegung eines Nutzers während einer Rehabilitationsübung an dem Stuhl (C) fixiert wird.

## Revendications

1. Système de robot de rééducation de type exosquelette comprenant :
une partie de corps (10) prévue sur une chaise (C) dans lequel un utilisateur s'assoit, et prévue avec un bras de robot (13) capable de se déplacer à gauche ou à droite sur la base de l'utilisateur assis sur la chaise ;
une partie de conversion (20) configurée pour convertir une position du bras de robot (13) par rapport à la partie de corps (10) ;
une partie d'entraînement (30) configurée pour articuler le bras de robot (13) par rapport à la partie de corps (10) ; et
un organe de commande (40) configuré pour détecter un changement dans une position du bras de robot (13) et commander un mode d'entraînement à gauche ou à droite de la partie d'entraînement (30) selon la position du bras de robot (13),
dans lequel la partie de corps (10) comprend :
un corps de robot (11) prévue, de manière solidaire, pour supporter la chaise (C) ;
une liaison de raccordement (12) formée pour faire saillie verticalement vers le haut à partir du corps de robot (11) et raccordée à ce dernier ; et
le bras de robot (13) raccordé, de manière rotative, à la liaison de raccordement (12) et prévu avec une pluralité de liaisons d'entraînement (131, 132, 133, 134) capables de réaliser le mouvement d'articulation,
dans lequel la partie de conversion (20) comprend :
un élément de raccordement (21) prévu entre la liaison de raccordement (12) et le bras de robot (13) pour être mobile de manière solidaire avec le bras de robot (13) ;
au moins un levier de serrage (22) configuré pour faire saillie vers la liaison de raccordement (12) par rapport à l'élément de raccordement (21) et prévu pour pouvoir tourner, de manière solidaire, avec le bras de robot (13) ;
des première et deuxième gorges de levier (23, 24) prévues sur la liaison de raccordement (12) de sorte que le levier de serrage (22) est inséré dans ces dernières, au moins l'une des première et deuxième gorges de levier (23, 24) étant respectivement prévue sur les côtés gauche et droit pour se faire face, avec un centre de rotation de la liaison de raccordement (12) intercalé entre elles ; et
une broche de positionnement (25) prévue pour faire saillie de la liaison de raccordement (12) afin d'être guidée le long d'un rail de guidage (26) prévu sur l'élément de raccordement (21) et configurée pour déterminer une position de rotation du bras de robot (13) en limitant une plage de rotation du bras de robot (13) ayant l'élément de raccordement (21),
dans lequel un mode d'entraînement à gauche et à droite du bras de robot (13) est automatiquement converti conjointement avec le levier de serrage (22) inséré dans l'une des première et deuxième gorges de levier (23, 24) et serré et fixé,
**caractérisé en ce que** :
l'organe de commande (40) comprend :
une partie de détection (50) configurée pour détecter que le levier de serrage (22) est inséré dans l'une des première et deuxième gorges de levier (23, 24) ; et
une partie d'entrée de signal (60) configurée pour fournir un signal d'entraînement à la partie d'entraînement (30) avec l'information détectée par la partie de détection (50).

2. Système de robot de rééducation de type exosquelette selon la revendication 1, dans lequel la position du bras de robot (13) est réglée en haut et en bas, vers l'avant et vers l'arrière et dans les directions gauche et droite sur la base de la chaise (C) en réponse à la forme du corps de l'utilisateur.

3. Système de robot de rééducation de type exosquelette selon la revendication 1, dans lequel l'élément de raccordement (21) est raccordé, de manière rotative, à une extrémité de la liaison de raccordement (12) par un palier et le palier comprend un palier à rouleaux coniques.

4. Système de robot de rééducation de type exosquelette selon la revendication 1, dans lequel le bras de robot (13) comprend :
une première liaison d'entraînement (131) dont une extrémité est raccordée, de manière rotative, à la liaison de raccordement (12) ;
une deuxième liaison d'entraînement (132) dont une extrémité est raccordée, de manière rotative, à une autre extrémité de la première liaison d'entraînement (131) ;
une troisième liaison d'entraînement (133) dont une extrémité est raccordée, de manière rotative, à une autre extrémité de la deuxième liaison d'entraînement (132) ; et
une quatrième liaison d'entraînement (134) dont une extrémité est raccordée, de manière rotative, à une autre extrémité de la troisième liaison d'entraînement (133),
dans lequel la quatrième liaison d'entraînement (134) est raccordée, de manière rotative, à un berceau (135) sur lequel le bras de l'utilisateur est placé.

5. Système de robot de rééducation de type exosquelette selon la revendication 4, dans lequel la partie d'entraînement (30) comprend :
un premier élément d'entraînement (31) prévu entre la première liaison d'entraînement (131) et une liaison de raccordement de la deuxième liaison d'entraînement (132) pour leur fournir la puissance de rotation ;
un deuxième élément d'entraînement (32) prévu entre les deuxième et troisième liaisons d'entraînement (132, 133) pour leur fournir la puissance de rotation ;
un troisième élément d'entraînement (33) prévu entre les troisième et quatrième liaisons d'entraînement (133, 134) pour leur fournir la puissance de rotation ; et
un quatrième élément d'entraînement (34) prévu entre la quatrième liaison d'entraînement (134) et le berceau (135) pour leur fournir la puissance de rotation.

6. Système de robot de rééducation de type exosquelette selon la revendication 4, dans lequel les première, deuxième, troisième et quatrième liaisons d'entraînement (131, 132, 133, 134) ont une forme de barre s'étendant dans une direction longitudinale ou une forme courbée.

7. Système de robot de rééducation de type exosquelette selon la revendication 1, dans lequel la partie de détection comprend :
un premier capteur (51) préparé pour correspondre à une position de direction gauche du bras de robot (13) ;
un deuxième capteur préparé pour correspondre à une position de direction droite du bras de robot (13) ; et
un élément de détection configuré pour détecter une posture d'entraînement de direction gauche ou droite du bras de robot (13) en interférant avec l'un des premier et deuxième capteurs (51, 52).

8. Système de robot de rééducation de type exosquelette selon la revendication 7, dans lequel l'élément de détection (53) comprend une gâchette prévue pour se verrouiller avec l'élément de raccordement (21) et mobile entre les premier et deuxième capteurs (51, 52).

9. Système de robot de rééducation de type exosquelette selon la revendication 7, dans lequel les premier et deuxième capteurs (51, 52) détectent l'élément de capteur (53) par contact physique ou par un procédé de détection de proximité, un procédé de détection optique ou un procédé de détection magnétique, et
l'élément de détection (53) est prévu en colorant une zone partielle du bras de robot (13) ou prévu pour faire saillie ou être enfoncé par rapport au bras de robot (13).

10. Système de robot de rééducation de type exosquelette selon la revendication 5, dans lequel lorsque une position gauche ou droite du bras de robot (13) est détectée, l'organe de commande (40) entraîne, de manière rotative, le quatrième élément d'entraînement (34) et entraîne ensuite, de manière rotative, les premier et deuxième éléments d'entraînement (31, 32), et lorsque l'entraînement des premier et deuxième éléments d'entraînement (31, 32) est terminé, l'organe de commande (40) fait tourner chacun des deuxième et troisième éléments d'entraînement (32, 33) tout en entraînant, de manière continue, le premier élément d'entraînement (31) et entraîne ensuite le troisième élément d'entraînement (33) pour régler une posture d'entraînement.

11. Système de robot de rééducation de type exosquelette selon la revendication 1, dans lequel la chaise (C) est prévue avec une ceinture réglable dans une direction longitudinale pour correspondre à la forme du corps d'un utilisateur, fixant ainsi le déplacement d'un utilisateur sur la chaise (C) pendant l'exercice de rééducation.
